# EUROPEAN PATENT SPECIFICATION

(11) **EP 1 742 413 B1**
(45) Date of publication and mention of the grant of the patent: **04.03.2009**
(21) Application number: 05742083.8
(22) Date of filing: 14.04.2005
(51) Int. Cl.: H04L 12/18, H04L 12/56, H04W 4/00

(54) **A METHOD OF STARTING THE SESSION OF MULTIMEDIA BROADCAST MULTICAST SERVICE**
VERFAHREN ZUM STARTEN DER SITZUNG EINES MULTIMEDIA-BROADCAST-MULTICAST-DIENSTES
PROCEDE DE DEMARRAGE DE SESSION D'UN SERVICE DE MULTIPLEXAGE DE PROGRAMMES DE DIFFUSION MULTIMEDIA

(30) Priority: 14.04.2004 CN 200410034467
(43) Date of publication of application: 10.01.2007
(73) Proprietor: Huawei Technologies Co., Ltd., Longgang District Shenzhen Guangdong 518129 (CN)
(72) Inventor: ZHANG, Hai, Huawei Administration Building,Bantian, Shenzhen Guangdong 518129 (CN)
(74) Representative: Mounteney, Simon James
(86) International application number: PCT/CN2005/000503
(87) International publication number: WO 2005/101737

(56) References cited:
- EP-A1- 1 353 471
- EP-A1- 1 359 774
- EP-A1- 1 376 926
- EP-A2- 1 363 467
- US-A1- 2003 134 653
- "3rdGPP TS 23.246 V.6.1.0 (2003-12) - 3rd GENERATION PARTERSHIP PROJECT" 3RD GENERATION PARTNERSHIP PROJECT (3GPP); TECHNICAL SPECIFICATION (TS), XX, XX, vol. 23.246, no. V610, December 2003 (2003-12), XP002987331

## Description

### Field of the invention

The present invention relates to multimedia broadcast multicast services (MBMS) in a 3G mobile communication system, more particularly to an MBMS session start method and a system thereof.

### Background of the invention

With the development of the 3G mobile communication technology, services with a higher speed than those in the 2G mobile communication systems are provided, with more types, including such services as Videotel, image downloading, high-speed Internet browsing and etc, wherein, one service has the feature that the service content could be sent simultaneously to the users who subscribe to the service in the radio network, such as weather forecast, news short, sports game selection and etc. With the service feature of simultaneous transmission, the multicast/broadcast technology is introduced in the 3G mobile communication systems.

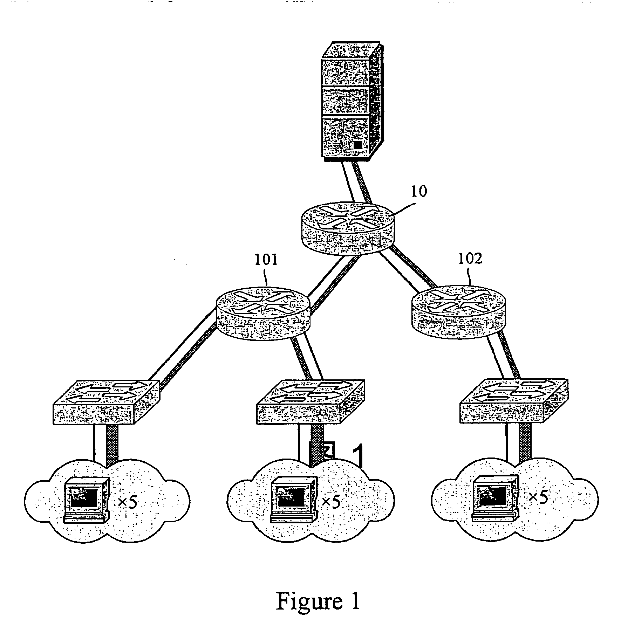

As shown in Figure 1, which is a schematic diagram illustrating the working principle of MBMS, for an intermediate node, no matter how many downstream nodes, as 10, 101, or 102 shown in Figure 1, are waiting to receive the data, the upstream node will send one set of data to the intermediate node; after receiving the data, the intermediate node will make data copies according to the number of downstream nodes waiting to receive the data, and distribute the data to the downstream nodes waiting to receive the data. In this way, one set of data will be transmitted in each branch of the MBMS data transmission tree and one set of resources for transmission is occupied, and it is the same for the data transmission from the root node to its downstream nodes. The difference between a multicast service and a broadcast service is that the service information is sent to the users who subscribe to the service in a multicast service instead of all the users in the radio network in a broadcast service. As the description shown above, the network resources could be saved remarkably by using MBMS to provide identical information simultaneously for a large number of users.

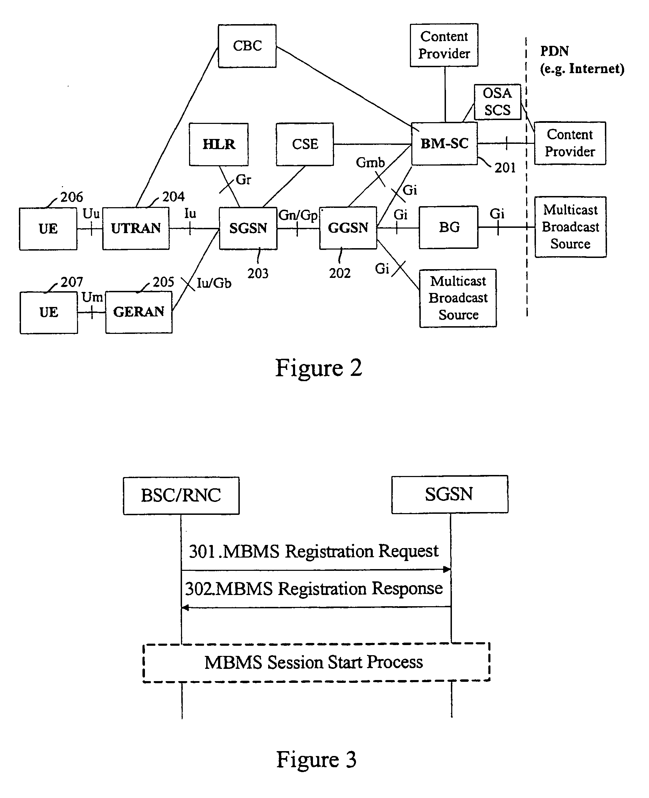

As shown in Figure 2, which is a schematic diagram illustrating the radio network architecture for MBMS, in the prior art according to the 3^{rd} Generation Partnership Project (3GPP), the radio network architecture for MBMS services is that the Broadcast/Multicast Service Centre (BM-SC) 201 is connected to Gateway GPRS (General Packet Radio Service) Support Node (GGSN) 202 via the Gmb interface or Gi interface, wherein one BM-SC 201 may be connected to multiple GGSN 202; GGSN 202 is connected to Serving GPRS Support Node (SGSN) 203 via the Gn/Gp interface, wherein one GGSN 202 may be connected to multiple SGSN 203; SGSN 203 is connected to Universal Terrestrial Radio Access Network (UTRAN) 204 in the Universal Mobile Telecommunications System (UMTS) via the Iu interface and the UTRAN 204 is connected to the User Equipment (UE) 206 via the Uu interface; or SGSN 203 may be connected to GSM/EDGE Radio Access Network (GERAN) 205 in the Global System for Mobile communications (GSM) via the Iu/Gb interface and the GERAN 205 is connected to UE 207 via the Um interface.

An MBMS bearer context is used for storing the MBMS bearer capacity, which includes all the description information for defining an MBMS bearer and will be established on all the nodes bearing the MBMS data. As shown in Table 1, an MBMS bearer context includes IP multicast address, Access Point Name (APN), Temporary Mobile Group Identifier (TMGI), state, required MBMS bearer capacity, Quality of Service (QoS), MBMS service area, list of downstream node, the number of UEs and etc, wherein, the IP multicast address identifies the MBMS bearer described by the MBMS bearer context; the APN is the access point name defined for the IP multicast address; the TMGI is the temporary mobile group identifier assigned for the MBMS bearer; the state is the activity state of the MBMS bearer ('static' or 'activated') indicating whether to establish bearer plane resources for the MBMS data transmission; the required MBMS bearer capacity identifies the least bearer capacity for the UE; the QoS is the quality of service required by the MBMS bearer; the MBMS service area is the area to which the MBMS information will be sent; the list of downstream node includes the downstream nodes that have requested the MBMS bearer and to which the MBMS data should be sent; the number of UEs is the number of UEs which join the multicast service and are dominated by the node.

**Table 1**

| Parameter | Description | RAN | SGSN | GGSN | BM-SC |
|---|---|---|---|---|---|
| IP multicast address | Identifying the MBMS bearer described by the MBMS bearer context. | X | X | X | X |
| APN | Access point name defined for the IP multicast address. | X | X | X | To be studied |
| TMGI | Temporary mobile group identifier assigned for the MBMS bearer. | X | X | X | X |
| State | Activity state of the MBMS bearer ('static' or 'activated') | To be studied | X | X | X |
| Required MBMS bearer capacity | The least bearer capacity for the UE | | X | X | X |
| QoS | Quality of service required by the MBMS bearer. | X | X | X | X |
| MBMS service area | Area to which the MBMS information will be sent. | X | X | X | X |
| List of downstrea m node | List of the downstream nodes that have requested the MBMS bearer and to which the MBMS data should be sent | | X | X | X |
| Number of UEs | Number of the UEs which join the multicast service and are dominated by the node. | To be studied | X | X | To be studied |

According to the network architecture as shown in Figure 2, the session start processes for a multicast service and a broadcast service of MBMS with the prior art are hereinafter described, respectively.
For an MBMS multicast service:
The users join the MBMS multicast service through an MBMS activation process, thus the network learns which users want to receive the information of a specific MBMS service.

Through an MBMS registration process, the network nodes can establish a distribution tree from BM-SC, via GGSN, SGSN, to Base Station Controller/Radio Network Controller (BSC/RNC), so as to allow the transmission for the attributes and data of an MBMS session. In the registration process, an MBMS bearer context can be established on the related nodes while no bearer plane is established.

As shown in Figure 3, which is a schematic diagram illustrating the MBMS registration process with the cooperation of BSC/RNC and SGSN, when the BSC/RNC finds the UE dominated by itself is interested in the MBMS service but the BSC/RNC has not registered for the MBMS service, the registration process will be executed, including:
Step 301: the BSC/RNC sends an MBMS registration request message to its parent SGSN.
Step 302: upon receiving the registration request message from the BSC/RNC, the SGSN that has registered for the MBMS bearer service adds the BSC/RNC to the "list of downstream node" in the MBMS bearer context and returns an MBMS registration response message to the BSC/RNC.

The MBMS session start process will be initiated when the BM-SC is ready to transmit the data. The session start process activates all the bearer resources necessary to transmit the MBMS data in the network and notifies the interested UEs that the data transmission is to be started. By this process, the BM-SC provides the MBMS session attributes, such as QoS, MBMS service area, estimated session duration (if existing) for the related interested nodes. This process will also initiate other related processes executed by the BSC/RNC in the access network, such as sending a session notification, counting the cell users, choosing the radio bearer type, establishing radio and cabled bearer planes and etc.

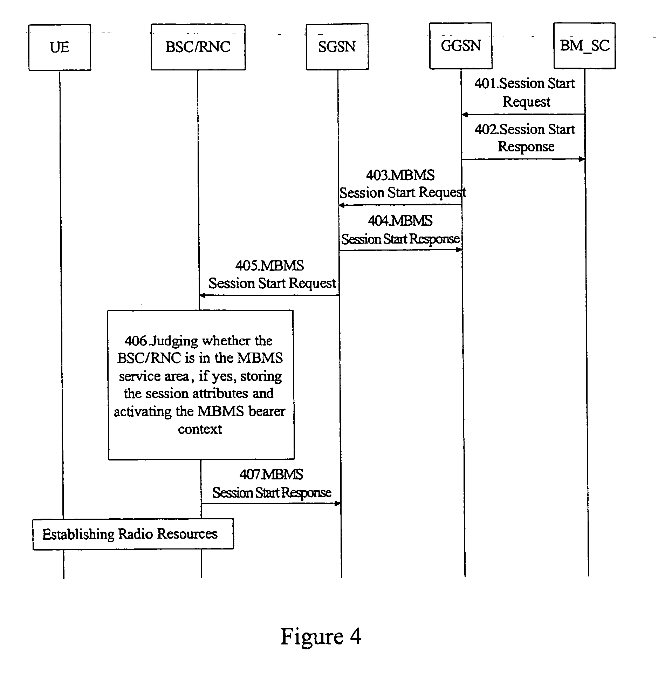

Figure 4 is a schematic diagram illustrating the session start process of an MBMS multicast service in the prior art. As shown in Figure 4, the process includes:
Step 401: the BM-SC sends a session start request to the GGSN stored in the "list of downstream node" in the corresponding MBMS bearer context, indicating the data transmission is to be started, and sets the state attribute as "activated" in the MBMS bearer context. The session start request provides such session attributes as QoS, MBMS service area, the estimated session duration and etc.
Step 402: upon receiving the session start request message, the GGSN stores the session attributes obtained from the message in the MBMS bearer context, sets the state attribute of the MBMS bearer context as "activated", and sends a session start response message to the BM-SC.
Step 403: the GGSN sends an MBMS session start request to the SGSN stored in the "list of downstream node" in the corresponding MBMS bearer context.
Step 404: upon receiving the MBMS session start request message, the SGSN stores the session attributes in the MBMS bearer context, sets the state attribute of the MBMS bearer context as "activated", and sends an MBMS session start response message to the GGSN, wherein the response message provides the Tunnel Endpoint Identifier (TEID) for the bearer plane, and for the GGSN to transmit the MBMS data.
Step 405: the SGSN sends an MBMS session start request message containing the session attributes to each BSC/RNC connected to this SGSN.
Step 406: the BSC/RNC judges whether it is covered by the MBMS service area, if yes, the BSC/RNC stores the session attributes in the MBMS bearer context, sets the state attribute of the MBMS bearer context as "activated" and then executes step 407; otherwise, executes step 407 directly.
Step 407: the BSC/RNC sends an MBMS session start response message to the SGSN.

If the BSC/RNC is covered by the MBMS service area, the MBMS session start response message will include the TEID, by which the SGSN establishes the Iu bearer plane to transmit the MBMS data.

One BSC/RNC may receive multiple MBMS session start request messages carrying the parameter of the Iu bearer plane and return one MBMS session start response message to establish an Iu plane bearer to an SGSN.

If the BSC/RNC is not covered by the MBMS service area, the MBMS session start response message sent to the SGSN will include the information indicating that the BSC/RNC is not covered by the MBMS service area.

Then, the BSC/RNC will be able to establish in the MBMS service area the radio resources necessary to transmit the MBMS data to the interested UEs.

For an MBMS broadcast service:
As a broadcast service transmits the information to all the users in the radio network, it is not needed for the network nodes to execute the MBMS registration process.

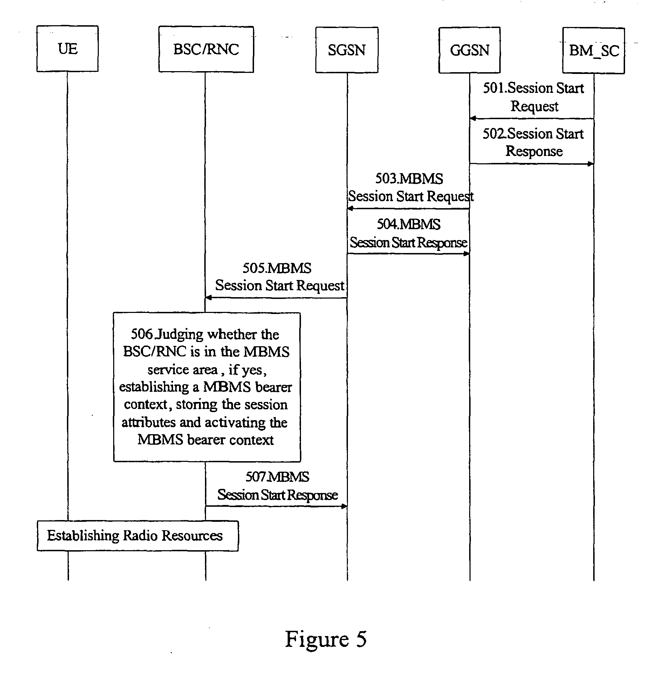

Figure 5 is a schematic diagram illustrating the session start process of an MBMS broadcast service in the prior art. As shown in Figure 5, the process includes:
Step 501: the BM-SC sends a session start request message to the GGSN in the Public Land Mobile Network (PLMN), indicating the data transmission is to be started, and sets the state attribute of the MBMS bearer context as "activated". The session start request provides such session attributes as QoS, MBMS service area, the estimated session duration and etc.
Step 502: upon receiving the session start request message, the GGSN establishes an MBMS bearer context and stores in the MBMS bearer context the session attributes obtained from the message, sets the state attribute of the MBMS bearer context as "activated", and sends a session start response message to the BM-SC.
Step 503: the GGSN sends an MBMS session start request message to each SGSN.
Step 504: upon receiving the MBMS session start request message, the SGSN establishes an MBMS bearer context, stores the session attributes in the MBMS bearer context, sets the state attribute of the MBMS bearer context as "activated", and sends an MBMS session start response message to the GGSN, wherein the response message provides the TEID for the bearer plane, for the GGSN to transmit the MBMS data.
Step 505: the SGSN sends an MBMS session start request message containing the session attributes to each BSC/RNC connected to the SGSN.
Step 506: the BSC/RNC judges whether it is covered by the MBMS service area, if yes, the BSC/RNC establishes an MBMS bearer context, stores the session attributes in the MBMS bearer context, sets the state attribute of the MBMS bearer context as "activated", and then executes step 507; otherwise, executes step 507 directly.
Step 507: the BSC/RNC sends an MBMS session start response message to the SGSN.

If the BSC/RNC is covered by the MBMS service area, the MBMS session start response message will include the TEID, by which the SGSN establishes the Iu bearer plane to transmit the MBMS data.

One BSC/RNC may receive multiple MBMS session start request messages carrying the parameter of the Iu bearer plane and return one MBMS session start response message to establish an Iu plane bearer to an SGSN.

If the BSC/RNC is not covered by the MBMS service area, the MBMS session start response message sent to the SGSN will include the information indicating that the BSC/RNC is not covered by the MBMS service area.

Then, the BSC/RNC will be able to establish in the MBMS service area the radio resources necessary to transmit the MBMS data to the UEs.

In an MBMS session process, it is possible for some BSC/RNCs covered by the MBMS service area to be unable to establish associated MBMS session bearers when the BSC/RNC does not have sufficient radio resources or some errors occur, for example. In a session start process of MBMS multicast/broadcast services in the prior art, however, all the BSC/RNCs covered by the MBMS multicast service area will store the session attributes, set the session state to activate, and establish the associated bearers.

Therefore, the steps indicated in the above processes in the prior art lead to resource waste of the radio interface and make the system processing more complicated.

In the prior standards for a session start process of MBMS broadcast service, it is not required for the BM-SC to send down the parameter of estimated session duration. Therefore, the radio access network can not optimize the radio resource management for the MBMS broadcast service according to the session duration, thus decreasing the effectiveness of the radio interface.

In addition, in the session start process of MBMS multicast service, when the BSC/RNC is to establish an MBMS bearer, it may not have performed an MBMS registration process for the MBMS multicast service. In this case, the BSC/RNC that has not performed the MBMS registration process can not execute the session start process of an MBMS multicast service completely and thus can not implement the MBMS multicast service completely.

In the document 3GPP TS 23.246 V.6.1.0 (2003-12) MBMS architecture and functional description (Release 6), an MBMS session start procedure is disclosed. In the known procedure, the element of RAN does not check whether to establish a bearer plane for the MBMS session before it establishes radio resources.

### Summary of the invention

In view of the above, the present invention provides a session start method for MBMS and a system thereof, which could optimize system performance, reduce the resource waste of radio interface and lower the complexity of the system processing.

The present invention is further to implement a complete session start process of an MBMS multicast service for the BSC/RNC that has not performed an MBMS registration process, and to provide the radio resource management parameters for the radio access network in an MBMS broadcast service.

The present invention provides a session start method for MBMS, which includes the following steps:
a Broadcast/Multicast Service Center (BM-SC) initiating a session start request message via a Gateway GPRS Support Node (GGSN) to a Serving GPRS Support Node (SGSN);
receiving the MBMS session start request message, the SGSN sending the MBMS session start request message to an element of a Radio Access Network (RAN);
receiving the MBMS session start request message, the element of the RAN checking whether to establish a bearer plane for the MBMS session, according to whether a user equipment (UE) in cells dominated by the element of the RAN needs to receive the MBMS session and whether the element of the RAN is capable of establishing the bearer for the MBMS session, if establishing, activating an MBMS bearer context and the element of the RAN establishing radio resources to the UE; if not establishing, the process being terminated.

If the session start request initiated by the BM-SC is for a multicast service,
the BM-SC sending a session start request message to the GGSN stored in a list of downstream node in the corresponding MBMS bearer context, and setting a state attribute of the MBMS bearer context to activate;
receiving the session start request message, the GGSN storing a session attribute obtained from the message into the MBMS bearer context, setting the state attribute of the MBMS bearer context to activate, and sending a session start response message to the BM-SC;
the GGSN sending the MBMS session start request message to the SGSN stored in the list of downstream node in the corresponding MBMS bearer context; and
receiving the MBMS session start request message, the SGSN storing the session attributes into the MBMS bearer context, setting the state attribute of the MBMS bearer context to activate, and sending an MBMS session start response message to the GGSN, wherein the session start response message providing a Tunnel End Identifier (TEID) used for the bearer plane.

If the session start request initiated by the BM-SC is the one for a broadcast service,
the BM-SC sending the session start request message to the GGSN in the Public Land Mobile Network (PLMN), and setting a state attribute of the MBMS bearer context to activate;
receiving the session start request message, the GGSN establishing the MBMS bearer context, storing a session attribute obtained from the message into the MBMS bearer context, setting the state attribute of the MBMS bearer context to activate, and sending a session start response message to the BM-SC;
the GGSN sending the MBMS session start request message to the SGSN that is connected to the GGSN;
receiving the session start request message, the SGSN establishing the MBMS bearer context, storing the session attribute into the MBMS bearer context, setting the state attribute of the MBMS bearer context to activate, and sending a session start response message to the GGSN, wherein the session start response message provides a TEID used for the bearer plane.

The session start request may carry an MBMS service area; the SGSN may determine, according to the MBMS service area, the element of the RAN which is connected to the SGSN and dominates cells overlapped by the MBMS service area; and send the MBMS session start request message to each determined element of the RAN.

The session start request message carries a session attribute of a parameter of estimated session duration;

The session start request may carry session attributes of an MBMS service area and a parameter of estimated session duration; the SGSN may determine, according to the MBMS service area, the element of the RAN which is connected to the SGSN and dominates cells overlapped by the MBMS service area; and send the MBMS session start request message to each determined element of the RAN; the element of the RAN may establish the radio resources to the UE for transmitting the MBMS data according to the estimated session duration.

The session start request message carries an MBMS service area, in this case, the SGSN may send the MBMS session start request message to each element of the RAN that is connected with the SGSN; the element of the RAN may check whether the cells under its domination are overlapped with the MBMS service area, if overlapped, check whether to establish a bearer plane for the MBMS session.

The element of the RAN may be a Base Station Controller (BSC) in Gb mode.

The element of the RAN may send an MBMS session start response to the SGSN indicating the element of the RAN whether to establish the bearer plane for the MBMS session.

If the session start request message initiated by the BM-SC is for a multicast service, the element of the RAN may activate an MBMS bearer context after a registration process is performed successfully.

The registration process may include the following steps:
the element of the RAN sending an MBMS registration request message to the SGSN; and
receiving the MBMS registration request message, the SGSN adding the element of the RAN to a list of downstream node in the MBMS bearer context, and returning an MBMS registration response to the element of the RAN.

The element of RAN may be a Base Station Controller (BSC)/Radio Network Controller (RNC).

The present invention also provide a system for starting the session of MBMS, which includes: a BM-SC, a GGSN connected to the BM-SC, an SGSN connected to the GGSN, an element of a RAN connected to the SGSN, and a UE connected to the RAN. The BM-SC is adapted to initiate a session start request message via the GGSN to the SGSN; the SGSN is adapted to receive the MBMS session start request message and to send the MBMS session start request message to the element of the RAN; the element of RAN is adapted to receive the MBMS session start request message, to check whether to establish a bearer plane for the MBMS session according to whether the UE in cells, dominated by the element of the RAN needs to receive the MBMS session and whether the element of the RAN is capable of establishing the bearer for the MBMS session, the element of the RAN being further adapted to activate an MBMS bearer context and to establish radio resources to the UE if it is decided to establish a bearer plane for the MBMS session.

In the system, the session start request message may be initiated for a multicast service, the GGSN may be the one stored in a list of downstream node in the corresponding MBMS bearer context. In this case, the BM-SC is adapted to send the session start request message to the GGSN and to set a state attribute of the MBMS bearer context to activate; the GGSN is adapted to receive the session start request message, to store a session attribute obtained from the message into the MBMS bearer context, and to set the state attribute of the MBMS bearer context to activate, and to send a session start response message to the BM-SC; the GGSN is adapted to send the MBMS session start request message to the SGSN stored in the list of downstream node in the corresponding MBMS bearer context; the SGSN is adapted to receive the MBMS session start request message, to store the session attribute into the MBMS bearer context, to set the state attribute of the MBMS bearer context to activate, and to send an MBMS session start response message to the GGSN, wherein the message provides a Tunnel End Identifier (TEID) for the bearer plane.

In the system, the session start request message may be initiated for a broadcast service, the GGSN is the one in the Public Land Mobile Network (PLMN). In this case, the BM-SC is adapted to send the session start request message to the GGSN and to set a state attribute of the MBMS bearer context to activate; the GGSN is adapted to receive the session start request message, to establish an MBMS bearer context, to store a session attribute obtained from the message into the MBMS bearer context, to set the state attribute of the MBMS bearer context to activate, and to send a session start response message to the BM-SC; the GGSN is adapted to send the MBMS session start request message to the SGSN that is connected to the GGSN; the SGSN is adapted to receive the session start request message, to establish an MBMS bearer context, to store the session attributes in the MBMS bearer context, to set the state attribute of the MBMS bearer context to activate, and to send a session start response message to the BM-SC, wherein the session start response message provides a TEID used for the bearer plane.

In the system, the session start request message may carry a session attribute of a parameter of estimated session duration.

In the system, the session start request message may carry session attributes of an MBMS service area and a parameter of estimated session duration; the element of the RAN is adapted to connect to the SGSN and to dominate cells overlapped by the MBMS service area. In this case, the SGSN is adapted to determine the element of the RAN according to the MBMS service area and to send the MBMS session start request message to each determined element of the RAN; the element of the RAN is adapted to establish the radio resources to the UE for transmitting the MBMS data according to the estimated session duration.

In the system, the element of the RAN may be a Base Station Controller (BSC)/Radio Network Controller (RNC).

In the system, in the case that the session start request message initiated by the BM-SC is for a multicast service, the element of the RAN is adapted to activate the MBMS bearer context after an registration process is performed successfully.

As shown in the above technical schemes, according to the session start method for MBMS of the present invention, only after the BSC/RNC decides to establish an MBMS bearer will the BSC/RNC set the state of the bearer plane to activate and establish a bearer plane, thus optimizing the system performance, reducing the resource waste of the radio interface, and lowering the complexity of the system processing. In addition, in a session start process of an MBMS multicast service, it will be judged whether the BSC/RNC has performed an MBMS registration process, if not, a registration process will be executed before activating an MBMS bearer context. Therefore, an MBMS registration process is initiated when the registration has not been performed, thus ensures that the MBMS session start process could be implemented correctly and completely.

### Brief description of the drawings

Figure 1 is a schematic diagram illustrating the working principle of MBMS;
Figure 2 is a schematic diagram illustrating the radio network architecture for MBMS;
Figure 3 is a schematic diagram illustrating the MBMS registration process with the cooperation of BSC/RNC and SGSN;
Figure 4 is a schematic diagram illustrating the session start process of an MBMS multicast service in the prior art;
Figure 5 is a schematic diagram illustrating the session start process of an MBMS broadcast service in the prior art;
Figure 6 is a schematic diagram illustrating the MBMS service area and the SGSN coverage;
Figure 7 is a schematic diagram for the First Embodiment according to the present invention, illustrating the session start process of an MBMS multicast service;
Figure 8 is a schematic diagram for the Second Embodiment according to the present invention, illustrating the session start process of an MBMS multicast service;
Figure 9 is a schematic diagram for the Third Embodiment according to the present invention, illustrating the session start process of an MBMS broadcast service.

### Detailed description of the invention

Four preferred embodiments according to the present invention are provided in detail.

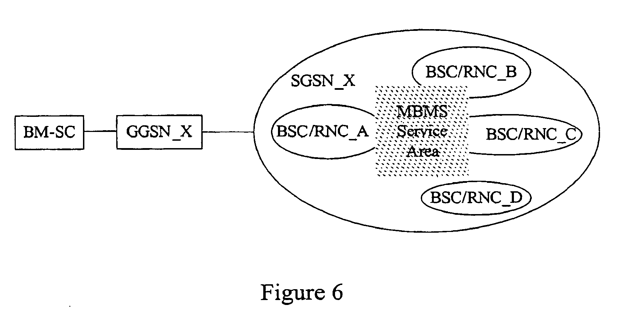

Figure 6 illustrates a schematic diagram illustrating the MBMS service area and the SGSN coverage of the present embodiment. The four preferred embodiments in the present invention are all implemented based on the condition shown in Figure 6. A BM-SC is connected to a GGSN_X and the GGSN_X is also connected to an SGSN_X. The SGSN_X dominates four elements of radio access network (RAN): BSC/RNC_A, BSC/RNC_B, BSC/RNC_C and BSC/RNC_D. In the present embodiment, the element of RAN is BSC in the 2G mobile communication network, and RNC in the 3G communication network. The MBMS service area covers part of BSC/RNC_A, part of BSC/RNC_B and part of BSC/RNC_C, respectively. The SGSN_X is in the list of downstream node for the GGSN_X, and the GGSN_X is in the list of downstream node for the BM-SC.

### First Embodiment:

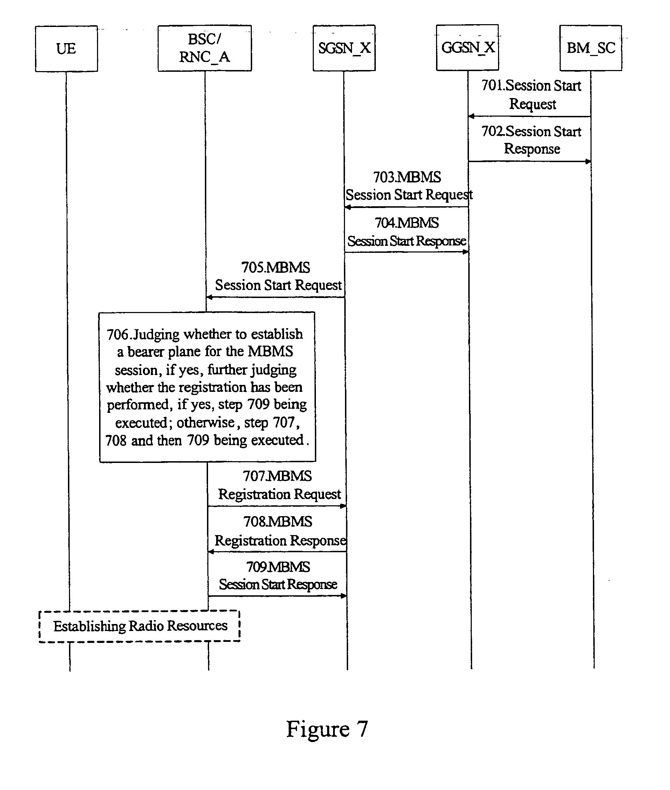

Figure 7 illustrates a schematic diagram for the first Embodiment according to the present invention, illustrating the session start process of an MBMS multicast service, which includes the following steps:
Step 701: the BM-SC sends a session start request message to the GGSN stored in the "list of downstream node" in the corresponding MBMS bearer context, indicating the data transmission is to be started, and sets the state attribute of the MBMS bearer context as "activated". The session start request message provides such session attributes as QoS, MBMS service area, estimated session duration and etc.
Step 702: upon receiving the session start request message, the GGSN_X stores the session attributes obtained from the request message in the MBMS bearer context, sets the state attribute of the MBMS bearer context as "activated", and sends a session start response message to the BM-SC.
Step 703: the GGSN_X sends an MBMS session start request message to the SGSN_X stored in the "list of downstream node" in the corresponding MBMS bearer context.
Step 704: upon receiving the MBMS session start request message, the SGSN_X stores the session attributes in the MBMS bearer context, sets the state attribute of the MBMS bearer context as "activated", and sends an MBMS session start response message to the GGSN_X, wherein the response message provides the TEID for the bearer plane, and for the GGSN to transmit the MBMS data.
Step 705: according to the MBMS service area information in the session attributes, the SGSN_X determines the cells overlapped by the MBMS service area and dominated by the BSC/RNCs connected to the SGSN_X, and then sends an MBMS session start request to each BSC/RNC corresponding to the determined cell. Specifically, the SGSN_X determines the cells covered at least partially by the MBMS service area among all the cells dominated by the BSC/RNCs connected to the SGSN_X, and sends an MBMS session start request message containing the session attributes to each BSC/RNC corresponding to the determined cell and serving the MBMS service area.

In this embodiment, among the cells dominated by the BSC/RNC_D, no cell is covered by the MBMS service area in this MBMS session, therefore, the SGSN_X sends the MBMS session start request messagesto BSC/RNC_A, BSC/RNC_B and BSC/RNC_C, respectively.

Step 706: upon receiving the MBMS session start request message from the SGSN_X, the BSC/RNC_A, BSC/RNC_B or BSC/RNC_C determines whether to establish a bearer plane for the MBMS session, according to whether there is a user who needs to receive the MBMS session information and is located in one of the cells dominated by the corresponding BSC/RNC, and whether the corresponding BSC/RNC is capable of establishing the radio and cabled bearers for the MBMS session.

In practice, this step may be executed by the BSC in the Gb mode.

As for the BSC/RNC_A, if it decides to establish a bearer plane for the MBMS session, it will first examine whether it has performed an MBMS registration, i.e. examine whether there exists an MBMS bearer context for the MBMS service, if yes, it will store the session attributes in the MBMS bearer context, set the state attribute of the MBMS bearer context as "activated", and then execute step 709; otherwise, it will store the session attributes in the MBMS bearer context, set the state attribute of the MBMS bearer context as "activated", and then execute step 707, step 708 and then step 709. Figure 7 shows the processing for BSC/RNC_A.

As for the BSC/RNC_B, if it decides to establish a bearer plane for the MBMS session and has performed the MBMS registration, it will store the session attributes in the MBMS bearer context, set the state attribute of the MBMS bearer context as "activated", and then execute step 709 directly.

As for the BSC/RNC_C, it decides not to establish a bearer plane for the MBMS session due to such reasons as no user interested in the MBMS session, radio or cabled resource insufficiency of the BSC/RNC_C or occurrence of other errors in the cells dominated by the BSC/RNC_C. In this case, execute step 709 directly.

Steps 707 - 708: the BSC/RNC_A performs an MBMS registration process which is completely the same as that shown in Figure 3, thus no further description is needed here.

Step 709: the BSC/RNC returns an MBMS session start response message to the SGSN_X.

As for the BSC/RNC_A or the BSC/RNC_B, the MBMS session start response message returned to the SGSN_X includes the TEID for the SGSN_X to establish the Iu bearer plane to transmit the MBMS data. Then, the BSC/RNC_A or the BSC/RNC_B will be able to establish in the MBMS service area the radio resources necessary to transmit the MBMS data to the interested UEs.

As for the BSC/RNC_C, the MBMS session start response message returned to the SGSN_X includes the information indicating the reason for not establishing the MBMS bearer plane.

### Second Embodiment:

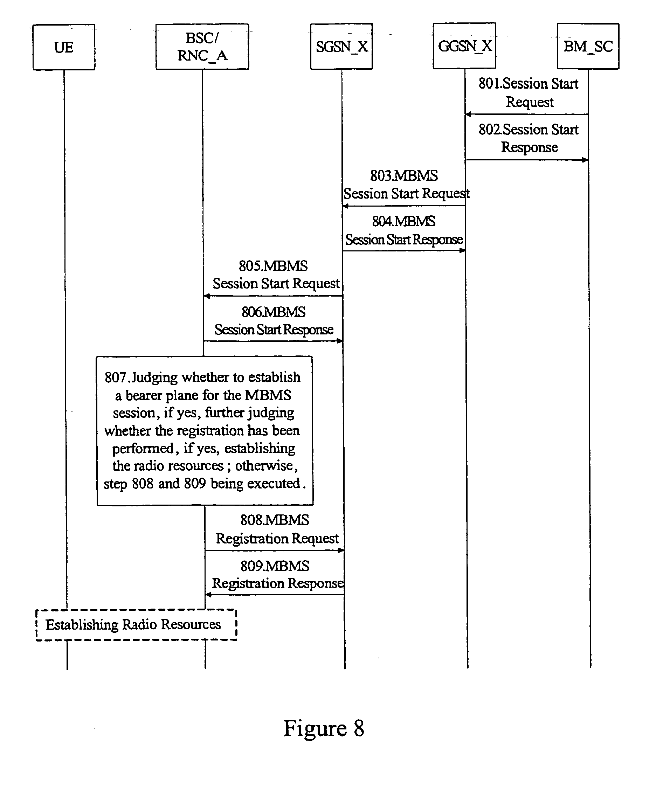

As shown in Figure 8, which is a schematic diagram for the Second Embodiment according to the present invention, illustrating the session start process of an MBMS multicast service. The difference between the First embodiment and Second embodiment is that the BSC/RNC_A performs the MBMS registration process after sending the MBMS session start response message to the SGSN_X in the Second Embodiment as shown in Figure 8 rather than before sending the MBMS session start response message to the SGSN_X in the First Embodiment as shown in Figure 7.

### Third Embodiment:

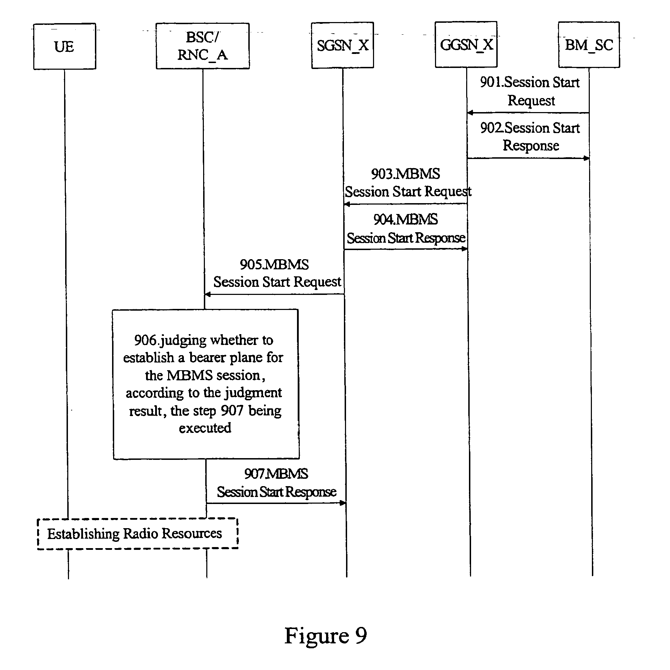

As shown in Figure 9, which is a schematic diagram for the Third Embodiment according to the present invention, illustrating the session start process of an MBMS broadcast service, which includes the following steps:
Step 901: the BM-SC sends a session start request message to the GGSN in the PLMN, indicating the data transmission is to be started, and sets the state attribute of the MBMS bearer context as "activated". The session start request message provides such session attributes as QoS, MBMS service area, estimated session duration and etc. If the BM-SC does not estimate the session duration, the session start request message will not provide the session attribute of the estimated session duration.
Step 902: upon receiving the session start request message, the GGSN_X establishes an MBMS bearer context, stores the session attributes obtained from the request message in the MBMS bearer context, sets the state attribute of the MBMS bearer context as "activated", and sends a session start response message to the BM-SC.
Step 903: the GGSN_X sends an MBMS session start request message to the SGSN_X connected to the GGSN_X.
Step 904: upon receiving the MBMS session start request message, the SGSN_X establishes an MBMS bearer context, stores the session attributes in the MBMS bearer context, sets the state attribute of the MBMS bearer context as "activated", and sends an MBMS session start response message to the GGSN_X, wherein the response message provides the TEID for the bearer plane, and for the GGSN to transmit the MBMS data.
Step 905: according to the MBMS service area information in the session attributes, the SGSN_X determines the cells overlapped by the MBMS service area and dominated by the BSC/RNCs connected to the SGSN_X, and then sends an MBMS session start request message containing the session attributes to each BSC/RNC corresponding to the determined cell.

In this embodiment, among the cells dominated by the BSC/RNC_D, no cell is covered by the MBMS service area in this MBMS session, therefore, the SGSN_X sends the MBMS session start request messages to BSC/RNC_A, BSC/RNC_B and BSC/RNC_C respectively.

Step 906: upon receiving the MBMS session start request message from the SGSN_X, the BSC/RNC_A, BSC/RNC_B or BSC/RNC_C determines whether to establish a bearer plane for the MBMS session, according to whether there is a user who needs to receive the MBMS session information and is located in one of the cells dominated by the corresponding BSC/RNC, and whether the corresponding BSC/RNC is capable of establishing the radio and cabled bearers for the MBMS session.

As for the BSC/RNC_A or BSC/RNC_B, if it decides to establish a bearer plane for the MBMS session, it will store the session attributes in the MBMS bearer context, set the state attribute of the MBMS bearer context as "activated", and then execute step 907.

As for the BSC/RNC_C, it decides not to establish a bearer plane for the MBMS session due to such reasons as no user interested in the MBMS session, radio or cabled resource insufficiency of the BSC/RNC_C or occurrence of other errors in the cells dominated by the BSC/RNC_C. In this case, execute step 907.

Step 907: the BSC/RNC returns an MBMS session start response message to the SGSN_X.

As for the BSC/RNC_A or the BSC/RNC_B, the MBMS session start response message returned to the SGSN_X includes the TEID for the SGSN_X to establish the Iu bearer plane to transmit the MBMS data. Then, the BSC/RNC_A or the BSC/RNC_B will be able to establish in the MBMS service area the radio resources necessary to transmit the MBMS data to the interested UEs. The BSC/RNC_A or the BSC/RNC_B will distribute the radio network resources according to the estimated session duration of the MBMS broadcast service in the session attributes together with the cooperation of the associated RRM arithmetic method.

As for the BSC/RNC_C, the MBMS session start response message returned to the SGSN_X includes the information indicating the reason for not establishing the MBMS bearer plane.

As a broadcast service will transmit information to all the users in the radio network, there is no MBMS registration process. Therefore, the main difference between the process in this embodiment and the process as shown in Figure 7 or Figure 8 is that there is no MBMS registration process for BSC/RNC_A. Meanwhile, compared with the process in the prior art as shown in Figure 5, in the session start process in this embodiment, a parameter of estimated session duration is carried for the radio access network to distribute the radio network resources.

### Fourth Embodiment:

In the process according to this embodiment, for either a multicast service or a broadcast service, the SGSN_X does not determine the BSC/RNCs connected to the SGSN_X and covered by the MBMS service area. Instead, the SGSN_X sends a session start request message to each BSC/RNC connected to the SGSN_X. After receiving the session start request message, the BSC/RNC_A, the BSC/RNC_B, the BSC/RNC_C or the BSC/RNC_D will first compare the cells dominated by the corresponding BSC/RNC with those in the MBMS service area according to the session start request message, and examine whether there is an overlap.

If there is, for a multicast service, execute step 706 and the following steps as shown in Figure 7 or step 806 and the following steps as shown in Figure 8, while for a broadcast service, execute step 906 and the following steps as shown in Figure 9.

If there is not, no following steps will be executed. The BSC/RNC may further return an MBMS session response message to the SGSN to indicate the associated reason.

As shown in the above described embodiments, according to the session start method for MBMS in the present invention, the session start request messages are sent to the BSC/RNCs serving in the MBMS service area defined by this MBMS session, thus avoiding the unnecessary involvement of other unrelated BSC/RNCs. Furthermore, after the BSC/RNC decides to establish an MBMS bearer, will the BSC/RNC set the state of the bearer plane to activate and establish the bearer plane, thus optimizing the system performance, reducing the resource waste of the radio interface and lowering the complexity of the system processing. For an MBMS broadcast service, the parameter of estimated session duration is carried and used for the radio access network to distribute the radio network resources, while for an MBMS multicast service, the MBMS registration process will be initiated when the MBMS registration process is not performed, thus ensure a complete and correct implementation of the MBMS session start process.

The above mentioned are preferred embodiments, but are not to confine the present invention. Those skilled in the art should understand that any modification or substitution can be easily made without departing from the scope of the present invention as defined by the appended claims.

## Claims

1. A Multimedia Broadcast/Multicast Service, MBMS, session start method, comprising:
a Broadcast/Multicast Service Center, BM-SC, initiating (701, 702, 703, 704, 801, 802, 803, 804; 901, 902, 903, 904) a session start request message via a Gateway GPRS Support Node, GGSN, to a Serving GPRS Support Node, SGSN;
receiving the MBMS session start request message, the SGSN sending (705; 805; 905) the MBMS session start request message to an element of a Radio Access Network, RAN;
receiving the MBMS session start request message, the element of the RAN checking (706; 807; 906) whether to establish a bearer plane for the MBMS session according to whether a user equipment, UE, in cells dominated by the element of the RAN needs to receive the MBMS session and whether the element of the RAN is capable of establishing the bearer for the MBMS session, if establishing, activating an MBMS bearer context and the element of the RAN establishing radio resources to the UE; if not establishing, the process being terminated.

2. The method according to Claim 1, wherein the session start request message is initiated for a multicast service;
the BM-SC sending (701; 801; 901) the session start request message to the GGSN stored in a list of downstream node in the corresponding MBMS bearer context, and setting a state attribute of the MBMS bearer context to activate;
receiving the session start request message, the GGSN storing a session attribute obtained from the message into the MBMS bearer context, setting the state attribute of the MBMS bearer context to activate, and sending (702; 802; 902) a session start response message to the BM-SC;
the GGSN sending (703; 803; 903) the MBMS session start request message to the SGSN stored in the list of downstream node in the corresponding MBMS bearer context; and
receiving the MBMS session start request message, the SGSN storing the session attribute into the MBMS bearer context, setting the state attribute of the MBMS bearer context to activate, and sending (704; 804; 904) an MBMS session start response message to the GGSN, wherein the session start response message providing a Tunnel End Identifier, TEID, used for the bearer plane.

3. The method according to Claim 1, wherein the session start request message is initiated for a broadcast service;
the BM-SC sending (701; 801; 901) the session start request message to the GGSN in the Public Land Mobile Network, PLMN, and setting a state attribute of the MBMS bearer context to activate;
receiving the session start request message, the GGSN establishing the MBMS bearer context, storing a session attribute obtained from the message into the MBMS bearer context, setting the state attribute of the MBMS bearer context to activate, and sending (702; 802; 902) a session start response message to the BM-SC;
the GGSN sending (703; 803; 903) the MBMS session start request message to the SGSN that is connected to the GGSN;
receiving the session start request message, the SGSN establishing the MBMS bearer context, storing the session attribute into the MBMS bearer context, setting the state attribute of the MBMS bearer context to activate, and sending (704; 804; 904) a session start response message to the GGSN,
wherein the session start response message provides a TEID used for the bearer plane.

4. The method according to Claim 1, wherein the session start request message carries an MBMS service area;
the SGSN determining, according to the MBMS service area, the element of the RAN which is connected to the SGSN and dominates cells overlapped by the MBMS service area; and sending the MBMS session start request message to each determined element of the RAN.

5. The method according to Claim 1, wherein the session start request message carries a session attribute of a parameter of estimated session duration.

6. The method according to Claim 1, wherein the session start request message carries session attributes of an MBMS service area and a parameter of estimated session duration;
the SGSN determining, according to the MBMS service area, the element of the RAN which is connected to the SGSN and dominates cells overlapped by the MBMS service area; and sending the MBMS session start request message to each determined element of the RAN.
the element of the RAN establishing the radio resources to the UE for transmitting the MBMS data according to the estimated session duration.

7. The method according to Claim 1, wherein the session start request message carries an MBMS service area; the SGSN sending the MBMS session start request message to each element of the RAN that is connected with the SGSN;
the element of the RAN checking whether the cells under its domination are overlapped with the MBMS service area, if overlapped, checking whether to establish a bearer plane for the MBMS session.

8. The method according to Claim 1, wherein the element of the RAN is a Base Station Controller, BSC, in Gb mode.

9. The method according to Claims 1, 4, 5, 6, 7 or 8, wherein the element of the RAN sending an MBMS session start response to the SGSN indicating the element of the RAN whether to establish the bearer plane for the MBMS session.

10. The method according to Claims 1, 4, 5, 6, 7 or 8, wherein, the session start request message initiated by the BM-SC is for a multicast service, the element of the RAN activating the MBMS bearer context after a registration process is performed successfully.

11. The method according to Claim 10, wherein the registration process comprises:
the element of the RAN sending an MBMS registration request message to the SGSN; and
receiving the MBMS registration request message, the SGSN adding the element of the RAN to a list of downstream node in the MBMS bearer context, and returning an MBMS registration response to the element of the RAN.

12. The method according to Claim 1, wherein the element of RAN is a Base Station Controller, BSC/Radio Network Controller,RNC.

13. A system for starting the session of Broadcast/Multicast Service, MBMS, Service comprising:
a Broadcast/Multicast Service Center, BM-SC (201);
a Gateway GPRS Support Node, GGSN (202), connected to the BM-SC (201);
a Serving GPRS Support Node, SGSN (203), connected to the GGSN (202);
an element of a Radio Access Network, RAN, connected to the SGSN (203); and
a User Equipment, UE (206, 207), connected to the RAN;
wherein the BM-SC (201) is adapted to initiate a session start request message via the GGSN (202) to the SGSN (203); the SGSN (203) is adapted to receive the MBMS session start request message and to send the MBMS session start request message to the element of the RAN; the element of RAN is adapted to receive the MBMS session start request message, to check whether to establish a bearer plane for the MBMS session according to
whether the UE in cells dominated by the element of the RAN needs to receive the MBMS session and whether the element of the RAN is capable of establishing the bearer for the MBMS session, the element of the RAN being further adapted to activate an MBMS bearer context and to establish radio resources to the UE if it is decided to establish a bearer plane for the MBMS session.

14. The system according to Claim 13, wherein the session start request message is initiated for a multicast service, the GGSN (202) is the one stored in a list of downstream node in the corresponding MBMS bearer context;
the BM-SC (201) is adapted to send the session start request message to the GGSN (202) and to set a state attribute of the MBMS bearer context to activate; the GGSN (202) is adapted to receive the session start request message, to store a session attribute obtained from the message into the MBMS bearer context, and to set the state attribute of the MBMS bearer context to activate, and to send a session start response message to the BM-SC (201); the GGSN (202) is adapted to send the MBMS session start request message to the SGSN (203) stored in the list of downstream node in the corresponding MBMS bearer context; the SGSN (203) is adapted to receive the MBMS session start request message, to store the session attribute into the MBMS bearer context, to set the state attribute of the MBMS bearer context to activate, and to send an MBMS session start response message to the GGSN (202), wherein the message provides a Tunnel End Identifier, TEID for the bearer plane.

15. The system according to Claim 13, wherein the session start request message is initiated for a broadcast service, the GGSN (202) is the one in the Public Land Mobile Network, PLMN;
the BM-SC (201) is adapted to send the session start request message to the GGSN (202) and to set a state attribute of the MBMS bearer context to activate; the GGSN (202) is adapted to receive the session start request message, to establish an MBMS bearer context, to store a session attribute obtained from the message into the MBMS bearer context, to set the state attribute of the MBMS bearer context to activate, and to send a session start response message to the BM-SC (201); the GGSN (202) is adapted to send the MBMS session start request message to the SGSN (203) that is connected to the GGSN (202); the SGSN (203) is adapted to receive the session start request message, to establish an MBMS bearer context, to store the session attributes in the MBMS bearer context, to set the state attribute of the MBMS bearer context to activate, and to send a session start response message to the BM-SC (201), wherein the session start response message provides a TEID used for the bearer plane.

16. The system according to Claim 13, wherein the session start request message carries a session attribute of a parameter of estimated session duration.

17. The system according to Claim 13, wherein the session start request message carries session attributes of an MBMS service area and a parameter of estimated session duration; the element of the RAN is adapted to connect to the SGSN (203) and to dominate cells overlapped by the MBMS service area;
the SGSN (203) is adapted to determine the element of the RAN according to the MBMS service area and to send the MBMS session start request message to each determined element of the RAN.
the element of the RAN is adapted to establish the radio resources to the UE (206, 207) for transmitting the MBMS data according to the estimated session duration.

18. The system according to Claim 13, wherein the element of the RAN is a BSC/RNC.

19. The system according to Claim 13, wherein the session start request message initiated by the BM-SC (201) is for a multicast service, the element of the RAN is adapted to activate the MBMS bearer context after a registration process is performed successfully.

## Patentansprüche

1. Startverfahren für einen Multimedien-Rundfunk-/Rundsendungsdienst, MBMS, umfassend:
eine Rundfunk-/Rundsendungs-Dienstzentiale, BM-SC, die eine Sitzungsstart-Anfordarungsmitteilung über einen Gateway-GPRS-Supportknoten, GGSN, an einen versorgenden GPRS-Supportknoten, SGSN, einleitet (701, 702, 703, 704, 801, 802, 803, 804; 901, 902, 903, 904);
die MBMS-Sitzungsstart-Anforderungsmitteilung empfangend, sendet (705; 805; 905) der SGSN die MBMS-Sitzungsstart-Anforderungsmitteilung an ein Element eines Funkanschlussnerzes, RAN;
die MBMS-Sitzungsstaxt-Anforderungsmitteilung empfangend, prüft (706; 807; 906) das Element des RAN, ob eine Trägerebene für MBMS-Sitzung einzurichten ist, je nachdem, ob eine Benutzerausrüstung, UE, in Zellen, die von dem Element des RAN dominiert werden, die MBMS-Sitzung empfangen muss, und ob das Element des RAN imstande ist, den Träger für die MBMS-Sitzung einzurichten, wenn eingerichtet wird, Aktivieren eines MBMS-Trägerkontextes und Einrichten von Funkbetriebsmitteln zu der UE durch das Element des RAN; wenn nicht eingerichtet wird, Beenden des Prozesses.

2. Verfahren nach Anspruch 1, wobei die Sitzungsstart-Auforderungsmitteilung für einen Rundsendungsdienst eingeleitet wird;
die BM-SC die Sitzungsstart-Anforderungsmitteilung an den GGSN sendet (701; 801; 901), der in einer Liste von nachgeschalteten Knoten in dem korrespondierenden MBMS-Trägerkontext gespeichert ist, und ein Zustandsattribut des MBMS-Trägerkontextes auf Aktivieren einstellt;
die Sitzungsstart-Anforderungsmitteilung empfangend, der GGSN ein Sitzungsattribut, das von der Mitteilung erhalten wurde, in den MBMS-Trägerkontext speichert, das Zustandsattribut des MBMS-Trägerkontextes auf Aktivieren einstellt und eine Sitzungsstaxt-Antwortmitteilung an die BM-SC sendet (702; 802; 902);
der GGSN die MBMS-Sitzungsstart-Anforderungsmitteilung an den SGSN sendet (703; 803; 903), der in der Liste von nachgeschalteten Knoten in dem korrespondierenden MBMS-Trägerkontext gespeichert ist; und
die MBMS-Sitzungsstart-Anforderungsmitteilung empfangend, der SGSN das Sitzungsattribut in dem MBMS-Trägerkontext speichert, das Zustandsattribut des MBMS-Trägerkontextes auf Aktivieren einstellt und eine MBMS-Sitzungsstart-Antwortmitteilung an den GGSN sendet (704; 804; 904), wobei die Sitzungsstart-Antwortmitteilung eine Tunnelendkennung, TEID, bereitstellt, die für die Trägerebene verwendet wird.

3. Verfahren nach Anspruch 1, wobei die Sitzungsstart-Auforderungsmitteilung für einen Rundfunkdienst eingeleitet wird;
die BM-SC die Sitzungsstart-Anforderungsmitteilung an den GGSN in dem öffentlichen Landmobilnetz, PLMN, sendet (701; 801; 901) und ein Zustandsattribut des MBMS-Trägerkontextes auf Aktivieren einstellt;
die Sitzungsstart-Anforderungsmitteilung empfangend, der GGSN den MBMS-Trägerkontext einrichtet, ein Sitzungsattribut, das aus der Mitteilung erhalten wurde, in dem MBMS-Trägerkontext speichert, das Zustandsattribut des MBMS-Trägerkontextes auf Aktivieren einstellt und eine Sitzungsstart-Antwortmitteilung an die BM-SC sendet (702; 802; 902);
der GGSN die MBMS-Sitzungsstart-Anforderungsmitteilung an den SGSN, der mit dem GGSN verbunden ist, sendet (703; 803; 903);
die Sitzungsstart-Anforderungsmitteilung empfangend, der SGSN den MBMS-Trägerkontext einrichtet, das Sitzungsattribut in dem MBMS-Trägerkontext speichert, das Zustandsattribut des MBMS-Trägerkontextes auf Aktivieren einstellt und eine Sitzungsstart-Antwortmittelung an den GGSN sendet (704; 804; 904), wobei die Sitzungsstart-Anwartiütteilung eine TEID bereitstellt, die für die Trägerebene verwendet wird,

4. Verfahren nach Anspruch 1, wobei die Sitzungsstart-Anforderungsmitteilung einen MBMS-Dienstbereich trägt;
der SGSN gemäß dem MBMS-Dienstbereich das Element des RAN bestimmt, das mit dem SGSN verbunden ist und Zellen dominiert, die von dem MBMS-Dienstbereich überlappt werden; und die MBMS-Sitzungsstart-Anforderungsmitteilung an jedes bestimmte Element des RAN sendet.

5. Verfahren nach Anspruch 1, wobei die Sitzungsstart-Anforderungsmitteilung ein Sitzungsattribut eines Parameters der geschätzten Sitzungsdauer trägt.

6. Verfahren nach Anspruch 1, wobei die Sitzungsstart-Anforderungsmitteilung Sitzungsattribute eines MBMS-Dienstbereichs und einen Parameters der geschätzten Sitzungsdauer trägt;
der SGSN gemäß dem MBMS-Dienstbereich das Element des RAN bestimmt, das mit dem SGSN verbunden ist und Zellen dominiert, die von dem MBMS-Dienstbereich überlappt werden; und die MBMS-Sitzungsstart-Anforderungsmitteilung an jedes bestimmte Element des RAN sendet.
das Element des RAN die Funkbetriebsmittel zu der UE zum Übertragen der MBMS-Daten gemäß der geschätzten Sitzungsdauer einrichtet.

7. Verfahren nach Anspruch 1, wobei die Sitzungsstart-Anforderungsmitteilung einen MBMS-Dienstbereich trägt, der SGSN die MBMS-Sitzungsstart-Anforderungsmitteilung an jedes Element des RAN sendet, das mit dem SGSN verbunden ist;
das Element des RAN prüft, ob die Zellen unter seiner Dominierung mit dem MBMS-Dienstbereich überlappen, falls sie überlappen, prüft, ob eine Trägerebene für die MBMS-Sitzung einzurichten ist.

8. Verfahren nach Anspruch 1, wobei das Element des RAN eine Basisstationssteuerung, BSC, im Gb-Modus ist.

9. Verfahren nach den Ansprüchen 1, 4, 5, 6, 7 oder 8, wobei das Element des RAN eine MBMS-Sitzungsstart-Antwort an den SGSN sendet, die dem Element des RAN angibt, ob die Trägerebene für die MBMS-Sitzung einzurichten ist.

10. Verfahren nach den Ansprüchen 1, 4, 5, 6, 7 oder 8, wobei die von der BM-SC eingeleitete Sitzungsstart-Anforderungsmitteilung für einen Rundsendungsdienst ist, das Element des RAN den MBMS-Trägerkontext aktiviert, nachdem ein Registrierungsprozess erfolgreich ausgerührt wurde.

11. Verfahren nach Anspruch 10, wobei der Registrierungsprozess umfasst:
das Element des RAN sendet eine MBMS-Registrierungs-Anforderungsmitteilung an den SGSN; und
die MBMS-Registrierungs-Anforderungsmitteilung empfangend, fügt der SGSN das Element des RAN zu einer Liste von nachgeschalteten Knoten in dem MBMS-Trägerkontext hinzu und sendet eine MBMS-Registrierungsantwort an das Element des RAN zurück.

12. Verfahren nach Anspruch 1, wobei das Element des RAN eine Basisstationssteuerung, BSC,/Funknetzsteuerung, RNC, ist.

13. System zum Starten der Sitzung eines Rundfunk-/Rundsendungsdienstes, MBMS, umfassend:
ein Rundfunk-/Rundsendungs-Dienstzentrale, BM-SC (201);
einen Gateway-GPRS-Supportknoten, GGSN (202), der mit der BM-SC (201) verbunden ist;
einen versorgenden GPRS-Supportknoten, SGSN, (203), der mit dem GGSN (202) verbunden ist;
ein Element eines Funkanschlussnetzes, RAN, das mit dem SGSN (203) verbunden ist; und
eine Benutzerausrüstung, UE (206, 207), die mit dem RAN verbunden ist;
wobei die BM-SC (201) angepasst ist, um eine Sitzungsstart-Amorderungsmitteilung über den GGSN (202) an den SGSN (203) einzuleiten; der SGSN (203) angepasst ist, um die MBMS-Sitzungsstart-Anforderungsmitteilung zu empfangen und die MBMS-Sitzungsstart-Anforderungsmitteilung an das Element des RAN zu senden; das Element des RAN angepasst ist, um die MBMS-Sitzungsstart-Anforderungsmitteilung zu empfangen, um zu prüfen, ob eine Trägerebene für die MBMS-Sitzung einzurichten ist, je nachdem, ob die UE in Zellen, die von den Element des RAN dominiert werden, die MBMS-Sitzung empfangen muss, und ob das Element des RAN imstande ist, den Träger für die MBMS-Sitzung einzurichten, wobei das Element des RAN weiter angepasst ist, um den MBMS-Trägerkontext zu aktivieren und Funkbetriebsmittel zu der UE einzurichten, wenn entschieden wird, eine Trägerebene für die MBMS-Sitzung einzurichten.

14. System nach Anspruch 13, wobei die Sitzungsstart-Anforderungsmitteilung für einen Rundsendungsdienst eingeleitet wird, der GGSN (202) der eine ist, der in einer Liste von nachgeschalteten Knoten in dem korrespondierenden MBMS-Trägerkontext gespeichert ist;
die BM-SC (201) angepasst ist, um die Sitzungsstart-Anforderungsmitteilung an den GGSN (202) zu senden und ein Zustandsattribut des MBMS-Trägerkontextes auf Aktivieren einzustellen; der GGSN (202) angepasst ist, um die Sitzungsstart-Anforderungsmitteilung zu empfangen, ein aus der Mitteilung erhaltenes Sitzungsattribut in dem MBMS-Trägerkontext zu speichern und das Zustandsattribut des MBMS-Trägerkontextes auf Aktivieren einzustellen und eine Sitzungsstart-Antwortmitteilung an die BM-SC (201) zu senden; der GGSN (202) angepasst ist, um die MBMS-Sitzungsstart-Anforderungsmitteilung an den SGSN (203), der in der Liste von nachgeschalteten Knoten in dem korrespondierenden MBMS-Trägerkontext gespeichert ist, zu senden; der SGSN (203) angepasst ist, um die MBMS-Sitzungsstart-Anforderujigsmitteilung zu empfangen, das Sitzungsattribut in dem MBMS-Trägerkontext zu speichern, das Zustandsattribut des MBMS-Trägerkontextes auf Aktivieren einzustellen und eine MBMS-Sitzungsstart-Antwortmitteilung an den GGSN (202) zu senden, wobei die Mitteilung eine Tunnelendkennung, TEID, für die Trägerebene bereitstellt.

15. System nach Anspruch 13, wobei die Sitzungsstart-Anforderungsmitteilung für einen Rundfunkdienst eingeleitet wird, der GGSN (202) der eine in dem öffentlichen Landmobilnetz, PLMN, ist;
die BM-SC (201) angepasst ist, um die Sitzungsstart-Anforderungsmitteilung an den GGSN (202) zu senden und ein Zustandsattribut des MBMS-Trägerkontextes auf Aktivieren einzustellen, der GGSN (202) angepasst ist, um die Sitzungsstart-Anforderungsmitteilung zu empfangen, einen MBMS-Trägerkontext einzurichten, ein aus der Mitteilung erhaltenes Sitzungsattribut in dem MSMS-Trägerkontext zu speichern, das Zustandsattribut des MBMS-Trägerkontextes auf Aktivieren einzustellen und eine Sitzungsstart-Antwortmitteilung an die BM-SC (201) zu senden; der GGSN (202) angepasst ist, um die MBMS-Sitzuxtgsstart-P.nfordexungsrxxitteilung an den SGSN (203), der mit dem GGSN (202) verbunden ist, zu senden; der SGSN (203) angepasst ist, um die Sitzungsstart-Anforderungsmitteilung zu empfangen, einen MBMS-Tragerkontext einzurichten, die Sitzungsattribute in dem MBMS-Tragerkontext zu speichern, das Zustandsattribut des MBMS-Trägerkontextes auf Aktivieren einzustellen und eine Sitzungsstart-Antwortmitteilung an die BM-SC (201) zu senden, wobei die Sitzungsstart-Antwortmitteilung eine TEID bereitstellt, die für die Trägerebene verwendet wird.

16. System nach Anspruch 13, wobei die Sitzungsstart-Anforderungsmitteilung ein Sitzungsattribut eines Parameters der geschätzten Sitzungsdauer trägt.

17. System nach Anspruch 13, wobei die Sitzungsstart-Anforderungsmitteilung Sitzungsattribute eines MBMS-Dienstbereichs und einen Parameters der geschätzten Sitzungsdauer trägt; das Element des RAN angepasst ist, um Verbindung mit dem SGSN (203) und herzustellen und Zellen zu dominieren, die von dem MBMS-Dienstbereich überlappt werden;
der SGSN (203) angepasst ist, um das Element des RAN gemäß dem MBMS-Dienstbereich zu bestimmen und die MBMS-Sitzungsstart-Anforderungsmitteilung an jedes bestimmte Element des RAN zu senden.
das Element des RAN angepasst ist, um die Funkbetriebsmittel zu der UE (206, 207) zum Übertragen der MBMS-Daten gemäß der geschätzten Sitzungsdauer einzurichten.

18. System nach Anspruch 13, wobei das Element des RAN eine BSC/RNC ist.

19. System nach Anspruch 13, wobei die von der BM-SC (201) eingeleitete Sitzungsstart-Anforderungsmitteilung für einen Rundsendungsdienst ist, das Element des RAN angepasst ist, um den MBMS-Trägerkontext zu aktivieren, nachdem ein Registrierungsprozess erfolgreich ausgerührt wurde.

## Revendications

1. Procédé de démarrage de session de service de multidiffusion/diffusion, MBMS, comportant :
un centre de service de multidiffusion/diffusion, BM-SC, initiant (701, 702, 703, 704, 801, 802, 803; 804 ; 901, 902, 903, 904) un message de demande de démarrage de session par le biais d'un noeud de support GPRS de transit, GGSN, à un noeud de support GPRS de desserte, SGSN ; et les étapes ci-dessous
dans lesquelles ;
à la réception du message de demande de démarrage de session de service MBMS, le noeud SGSN transmet (705 ; 805 ; 905) le message de demande de démarrage de session de service MBMS à un élément d'un réseau d'accès radio, RAN ;
à la réception du message de demande de démarrage de session de service MBMS, l'élément du réseau RAN vérifie (706 ; 807 ; 906) s'il convient d'établir un plan de porteuse pour la session de service MBMS en fonction de si un équipement utilisateur, UE, dans des cellules dominées par l'élément du réseau RAN, a besoin de recevoir la session de service MBMS, et de si l'élément du réseau RAN est apte à établir la porteuse pour la session de service MBMS, dans le cas où l'établissement de la porteuse est possible, l'élément du réseau RAN active un contexte de porteuse de service MBMS et l'élément du réseau RAN établit des ressources radio à l'équipement UE ; dans le cas où l'établissement de la porteuse est impossible, le processus est abandonné.

2. Procédé selon la revendication 1, dans lequel le message de demande de démarrage de session est initié pour un service de multidiffusion ;
le centre de service BM-SC transmet (701 ; 801 ; 901) le message de demande de démarrage de session au noeud GGSN stocké dans une liste de noeuds en liaison descendante dans le contexte de porteuse de service MBMS correspondant, et définit un attribut d'état du contexte de porteuse de service MBMS à activer ;
à la réception du message de demande de démarrage de session, le noeud GGSN stocke un attribut de session obtenu à partir du message dans le contexte de porteuse de service MBMS, définit l'attribut d'état du contexte de porteuse de service MBMS à activer, et transmet (702 ; 802 ; 902) un message de réponse de démarrage de session au centre de service, BM-SC ;
le noeud GGSN transmet (703 ; 803 ; 903) le message de demande de démarrage de session de service MBMS au noeud SGSN stocké dans la liste de noeuds en liaison descendante dans le contexte de porteuse de service MBMS correspondant; et
à la réception du message de demande de démarrage de session de service MBMS, le noeud SGSN stocke l'attribut de session dans le contexte de porteuse de service MBMS, définit l'attribut d'état du contexte de porteuse de service MBMS à activer, et transmet (704 , 804 ; 904) un message de réponse de démarrage de session de service MBMS au noeud GGSN, dans lequel le message de réponse de démarrage de session délivre un identifiant d'extrémité de tunnel, TEID, utilisé pour le plan de porteuse,

3. Procédé selon la revendication 1, dans lequel le message de demande de démarrage de session est initié pour un service de diffusion générale ;
le centre de service BM-SC transmet (701 ; 801 ; 901) le message de demande de démarrage de session au noeud GGSN dans le réseau mobile terrestre public, PLMN, et définit un attribut d'état du contexte de porteuse de service MBMS à activer ;
à la réception du message de demande de démarrage de session, le noeud GGSN établit le contexte de porteuse de service MBMS, stocke un attribut de session obtenu à partir du message dans le contexte de porteuse de service MBMS, définit l'attribut d'état du contexte de porteuse de service MBMS, à activer, et transmet (702 ; 802 ; 902) un message de réponse de démarrage de session au centre de service BM-SC ;
le noeud GGSN transmet (703 ; 803 ; 903) le message de demande de démarrage de session de service MBMS au noeud SGSN qui est connecté au noeud GGSN ;
à la réception du message de demande de démarrage de session, le noeud SGSN établit le contexte de porteuse de service MBMS, stocke l'attribut de session dans le contexte de porteuse de service MBMS, définit l'attribut d'état du contexte de porteuse de service MBMS à activer, et transmet (704 ; 804 ; 904) un message de réponse de démarrage de session au noeud GGSN,
dans lequel le message de réponse de démarrage de session délivre un identifiant TEID utilisé pour le plan de porteuse,

4. Procédé selon la revendication 1, dans lequel le message de demande de démarrage de session transporte une zone de service MBMS ;
le noeud SGSN détermine, en fonction de la zone de service MBMS, l'élément du réseau RAN qui est connecté au noeud SGSN et domine des cellules chevauchées par la zone de service MBMS ; et transmet le message de demande de démarrage de session de service MBMS à chaque élément déterminé du réseau RAN.

5. Procédé selon la revendication 1, dans lequel le message de demande de démarrage de session transporte un attribut de session d'un paramètre de durée estimée de session.

6. Procédé selon la revendication 1, dans lequel le message de demande de démarrage de session transporte des attributs de session d'une zone de service MBMS et un paramètre de durée estimée de session ;
le noeud SGSN détermine, en fonction de la zone de service MBMS, l'élément du réseau RAN qui est connecté au noeud SGSN et domine des cellules chevauchées par la zone de service MBMS ; et transmet le message de demande de démarrage de session de service MBMS à chaque élément déterminé du réseau RAN;
l'élément du réseau RAN établit les ressources radio à l'équipement UE pour transmettre les données de service MBMS, selon la durée estimée de session.

7. Procédé selon la revendication 1, dans lequel le message de demande de démarrage de session transporte une zone de service MBMS ; le noeud SGSN transmet le message de demandé de démarrage de session de service MBMS à chaque élément du réseau RAN qui est connecté avec le noeud SGSN ;
l'élément du réseau RAN vérifie si les cellules sous sa domination sont chevauchées par la zone de service MBMS, le cas échéant, il vérifie s'il convient d'établir un plan de porteuse pour la session de service MBMS.

8. Procédé selon la revendication 1, dans lequel l'élément du réseau RAN est un contrôleur de station de base, BSC, en mode Gb.

9. Procédé selon l'une quelconque des revendications 1, 4, 5, 6, 7 ou 8, dans lequel l'élément du réseau RAN transmet une réponse de démarrage de session de service MBMS au noeud SGSN indiquant à l'élément du réseau RAN s'il convient d'établir le plan de porteuse pour la session de service MBMS.

10. Procédé selon l'une quelconque des revendications 1, 4, 5, 6, 7 ou 8, dans lequel, le message de demande de démarrage de session initié par le centre de service BM-SC est destiné à un service de multidiffusion, l'élément du réseau RAN active le contexte de porteuse de service MBMS lorsqu'un processus d'enregistrement a été mis en oeuvre avec succès.

11. Procédé selon la revendication 10, dans lequel le processus d'enregistrement comporte les étapes dans lesquelles :
l'élément du réseau RAN transmet un message de demandé d'enregistrement de service MBMS au noeud SGSN ; et
à la réception du message de demande d'enregistrement de service MBMS, le noeud SGSN ajoute l'élément du réseau RAN à une liste de noeud en liaison descendante dans le contexte de porteuse de service MBMS, et renvoie une réponse d'enregistrement de service MBMS, à l'élément du réseau RAN.

12. Procédé selon la revendication 1, dans lequel l'élément de réseau RAN est un contrôleur de station de base, BSC / contrôleur de réseau radio, RNC.

13. Système pour démarrer la session de service de multidiffusion/diffusion, MBMS, comportant :
un centre de service de multidiffusion/diffusion, BM-SC (201) ;
un noeud de support GPRS de transit, GGSN (202), connecté au centre de service BM-SC (201) ;
un noeud de support GPRS de desserte, SGSN (203), connecté au noeud GGSN (202) ;
un élément d'un réseau d'accès radio, RAN, connecté au noeud SGSN (203) ; et
un équipement utilisateur, UE (206, 207), connecté au réseau RAN ;
dans lequel le centre de service BM-SC (201) est apte à initier un message de demande de démarrage de session par le biais du noeud GGSN (202) au noeud SGSN (203) ; le noeud SGSN (203) est apte à recevoir le message de demande de démarrage de session de service MBMS et à transmettre le message de demande de démarrage de session de service MBMS à l'élément du réseau RAN ; l'élément de réseau RAN est apte à recevoir le message de demande de démarrage de session de service MBMS, à vérifier s'il convient d'établir un plan de porteuse pour la session de service MBMS, en fonction de si l'équipement utilisateur, UE, dans des cellules dominées par l'élément du réseau RAN, a besoin de recevoir la session de service MBMS, et de si l'élément du réseau RAN est apte à établir la porteuse pour la session de service, MBMS,
l'élément du réseau RAN étant en autre apte à activer un contexte de porteuse de service MBMS, et à établir des ressources radio à l'équipement UE lorsqu'il est décidé d'établir un plan de porteuse pour la session de service MBMS.

14. Système selon la revendication 13, dans lequel le message de demande de démarrage de session est initié pour un service de multidiffusion, le noeud GGSN (202) est celui stocké dans une liste de noeuds en liaison descendante dans le contexte de porteuse de service MBMS correspondant ;
le centre de service BM-SC (201) est apte à transmettre le message de demande de démarrage de session au noeud GGSN, (202) et à définir un attribut d'état du contexte de porteuse de service MBMS à activer ; le noeud GGSN (202) est apte à recevoir le message de demande de démarrage de session, à stocker un attribut de session obtenu à partir du message dans le contexte de porteuse de service MBMS, et à définir l'attribut d'état du contexte de porteuse de service MBMS à activer, et à transmettre un message de réponse de démarrage de session au centre de service BM-SC (201) ; le noeud GGSN (202) est apte à transmettre le message de demande de démarrage de session de service MBMS, au noeud SGSN (203) stocké dans la liste de noeud en liaison descendante dans le contexte de porteuse de service MBMS correspondant ; le noeud SGSN (203) est apte à recevoir le message de demande de démarrage de session de service MBMS, à stocker l'attribut de session dans le contexte de porteuse de service MBMS, à définir l'attribut d'état du contexte de porteuse de service MBMS à activer, et à transmettre un message de réponse de démarrage de session de service MBMS au noeud GGSN (202), dans lequel le message fournit un identifiant d'extrémité de tunnel, TEID, pour le plan de porteuse.

15. Système selon la revendication 13, dans lequel le message de demande de démarrage de session est initié pour un service de diffusion générale, le noeud GGSN (202) est celui dans le réseau mobile terrestre public, PLMN ;
le centre de service BM-SC (201) est apte à transmettre le message de demande de démarrage de session au noeud GGSN (202) et à définir un attribut d'état du contexte de porteuse de service MBMS à activer : le noeud GGSN (202) est apte à recevoir le message de demande de démarrage de session, à établir un contexte de porteuse de service MBMS, à stocker un attribut de session obtenu à partir du message dans le contexte de porteuse de service MBMS, à définir l'attribut d'état du contexte de porteuse de service MBMS à activer, et à transmettre un message de réponse de démarrage de session au centre de service BM-SC (201) ; le noeud GGSN (202) est apte à transmettre le message de demande de démarrage de session de service MBMS au noeud SGSN (203) qui est connecté au noeud GGSN (202) ; le noeud SGSN (203) est apte à recevoir le message de demande de démarrage de session, à établir un contexte de porteuse de service MBMS, à stocker l'attribut de sessions dans le contexte de porteuse de service MBMS, à définir l'attribut d'état du contexte de porteuse de service MBMS à activer, et à transmettra un message de réponse de démarrage de session au centre de service BM-SC (201), dans lequel le message de réponse de démarrage de session délivre un identifiant TEID utilisé pour le plan de porteuse.

16. Système selon la revendication 13, dans lequel message de demande de démarrage de session transporte un attribut de session d'un paramètre de durée estimée de session.

17. Système selon la revendication 13, dans lequel le message de demande de démarrage de session transporte des attributs de session d'une zone de service MBMS, et un paramètre de durée estimée de session ; l'élément du réseau RAN est apte à se connecter au noeud SGSN (203) et à dominer des cellules chevauchées par la zone de service MBMS ;
le noeud SGSN (203) est apte à déterminer l'élément du réseau RAN en fonction de la zone de service MBMS et à transmettre le message de demande de démarrage de session de service MBMS à chaque élément détermine du réseau RAN,
l'élément du réseau RAN est apte à établir les ressources radio à l'équipement UE (206, 207) en vue de transmettre les données de service MBMS selon la durée estimée de session

18. Système selon la revendication 13, dans lequel l'élément du réseau RAN est un contrôleur BSC/RNC.

19. Système selon la revendication 13, dans lequel le message de demande de démarrage de session initié par le centre de service BM-SC (201) est destiné à un service de multidiffusion, l'élément du réseau RAN est apte à activer le contexte de porteuse de service MBMS lorsqu'un processus d'enregistrement a été mis en oeuvre avec succès.
